# EUROPEAN PATENT SPECIFICATION

(11) **EP 4 165 836 B1**
(45) Date of publication and mention of the grant of the patent: **01.01.2025**
(21) Application number: 20733733.8
(22) Date of filing: 16.06.2020
(51) Int. Cl.: H04L 43/065, H04L 43/062, H04L 43/106, H04L 41/147, H04L 43/028, H04L 41/0894, H04L 41/149, H04L 43/20

(54) **TECHNIQUE FOR REPORTING NETWORK TRAFFIC ACTIVITIES**
TECHNIK ZUR MELDUNG VON NETZWERKVERKEHRSAKTIVITÄTEN
TECHNIQUE DE RAPPORT D'ACTIVITÉS DE TRAFIC DE RÉSEAU

(43) Date of publication of application: 19.04.2023
(73) Proprietor: Telefonaktiebolaget LM Ericsson (publ), 164 83 Stockholm (SE)
(72) Inventor: TESLENKO, Maxim, 192 74 Sollentuna (SE); FERSMAN, Elena, 11123 Stockholm (SE); KARAPANTELAKIS, Athanasios, 169 79 Solna (SE); VULGARAKIS FELJAN, Aneta, 112 16 Stockholm (SE)
(74) Representative: Ericsson
(86) International application number: PCT/EP2020/066597
(87) International publication number: WO 2021/254600

(56) References cited:
- US-A1- 2016 261 472
- US-A1- 2017 373 950
- US-A1- 2019 253 917
- US-B1- 10 411 978

## Description

### Technical Field

The present disclosure generally relates to the field of processing information gathered in a communications network with the aim of reporting network traffic activities of mobile devices. The technique presented herein may be implemented in the form of a method, a computer program product, a network apparatus, and a network system.

### Background

In current mobile communications networks, network traffic patterns of mobile devices are primarily analysed for enforcing traffic handling policies and other network-related policies, including quality of service guarantees, charging agreements, and admission control. In some implementations, the associated traffic analysis is done in a core network domain by a Policy Control and Charging Rules Function (PCRF). In addition to exposing information about network traffic activities for PCRF-based policy enforcement, there is some further information exposure by service exposure functions, including a Service Capability Exposure Function (SCEF) in 4^{th} Generation (4G)/Long Term Evolution (LTE) communications networks and a Network Exposure Function (NEF) in 5^{th} Generation (5G) communications networks. In this case, the exposed information mainly relates to connectivity aspects (e.g., roaming status, communication failures, availability after downlink data failure, number of mobile devices in a certain geographical area, detection of radio access network congestion, loss of connectivity, and reachability).

Moreover, the Network Data Analytics Function (NWDAF) newly introduced for 5G communications networks also provides analytics services. These services are provided using a similar subscribe/notify model as SCEF and NEF. The purpose of NWDAF is to provide traffic monitoring insights. Examples of such insights include the load status of active network slices, application performance or predicting/analysing behaviour of mobile devices.

The network functions discussed above target at exposing network traffic information for purposes of service quality monitoring, monitoring of mobile infrastructure status or monitoring of mobile device status, and the monitored information is mainly intended for the owners of the respective assets, for example the network operators and/or the device owners. Therefore, the information exposed typically includes either an identity of a mobile device or an identity of a group of mobile devices. In some cases it would, however, be desired to anonymously report insights about network traffic activities of mobile devices.

One solution in this regard would be information aggregation, for example by reporting the number of mobile devices fulfilling certain filtering criteria without disclosing the associated device identifiers. However, there exist various challenges in case the report is to be generated from highly granular information (e.g., on Protocol Data Unit, PDU, level), in particular when the monitoring period may cover an extended period of time.

Document US 10 411 978 B1 may be construed to disclose a technique pertaining to monitoring network traffic using a monitoring engine that monitors network traffic in networks to provide metrics. An inference engine may provide activity profiles based on portions of the network traffic where each activity profile includes features associated with the portions of network traffic. The inference engine may determine other activity profiles correlated with the activity profiles based on correlation models such that the determination of the other activity profiles occurs prior to monitoring an occurrence of other portions of the network traffic. The inference engine may modify monitoring actions of the monitoring engine based on the other activity profiles. The inference engine may provide reports based on the portions of the network traffic, the activity profiles, the other portions of the network traffic, or the other activity profiles.

### Summary

There is a need for a technique for efficiently reporting information gathered for network traffic activities of mobile devices.

According to the present disclosure, there are provided a method, a computer program product, a network apparatus and network systems according to the independent claims. Further developments are set forth in the dependent claims.

According to a first aspect, a method of reporting information included in data records generated for network traffic activities of a plurality of mobile devices is provided. Each data record includes a traffic type of a traffic activity of a mobile device, a timestamp of the traffic activity, and an identifier of the mobile device. The method comprises receiving a monitoring request specifying a monitoring type, and calculating from the data records a number of mobile devices having, within a given monitoring period, traffic activities that fulfil the following conditions:
i) a traffic type of the traffic activity matches the monitoring type;
ii) a timestamp of the traffic activity falls within the monitoring period; and
iii) traffic activities associated with the same identifier of the mobile device and the same traffic activity are considered only once per monitoring period.

The method of the first aspect further comprises returning, in response to the monitoring request, a monitoring report that is based on the calculated number of mobile devices.

The monitoring report may include a parameter that is based on the calculated number of mobile devices and indicative of an extent across mobile devices of the traffic activity associated with the monitoring type and the monitoring period. In some variants, the parameter may be the calculated number of mobile devices as such (e.g., for a particular point in time corresponding to the monitoring period). In other variants, the parameter may be an averaged number of mobile devices derived by averaging two or more individually calculated number of devices (e.g., for different points in time within the monitoring period). As such, the monitoring period may be defined to be a point in time or may have a longer temporal extension (e.g., of seconds, minutes, hours, or days).

The monitoring report may only include anonymized information. For example, the report may not include any information allowing to identify a particular mobile device or a particular device group included in calculated number of mobile devices. In particular, the report may not include any mobile device identifiers.

In some variants, traffic activities associated with the same identifier and the same traffic activity are considered only once per monitoring period to avoid counting multiple data records associated with the same traffic activity and the same traffic type multiple times per mobile device and, thus, falsifying the calculation of the actual number of mobile devices. In one implementation, to fulfil condition iii), multiple data records per mobile device that concurrently fulfil conditions i) and ii) are only considered once. For example, out of a set of data records that fulfil conditions i) and ii) for a given mobile device, only one data record (e.g., the first within the monitoring period) is actually considered to increment the current count of the number of devices, and the other data records do not lead to a (further) incrementation.

Each traffic activity may comprises transmission of a series of Protocol Data Units (PDUs). The PDUs may be associated with a particular communication protocol on any particular layer of the Open System Interconnection (OSI) model. Depending on the layer, such PDUs are for example called segments or datagrams (layer 4), data packets (layer 3), and frames (layer 2).

The series of PDUs may be transmitted in the context of a session established for a particular mobile device, or otherwise. In some cases, one data record has been generated from one PDU.

Each PDU may have a PDU header and a PDU payload. The traffic type included in a particular data record may be determined (e.g., upon data record generation) by at least one of PDU header inspection and PDU payload inspection. For example, the PDUs may be selected from Internet Protocol (IP) PDUs and Hypertext Transfer Protocol (HTTP) PDUs, and the corresponding header or payload may then be inspected.

Generating an individual one of the data records may comprise receiving a measurement report indicating, for a current traffic activity of a particular mobile device, a traffic type of the traffic activity and an identifier of the mobile device. The measurement report may pertain to a dedicated PDU or a dedicated series of PDUs. The measurement report may be generated by one or both of PDU header inspection and PDU payload inspection. The measurement report may be generated in a radio access network domain or in a core network domain of a mobile communications system.

According to a first variant, generating an individual one of the data records may further comprise generating a data record associating the traffic type and the identifier of the particular mobile device, and providing the data record with a time stamp. According to a second variant, generating an individual one of the data records may further comprise requesting, based on the identifier of the mobile device, a geographical location of the traffic activity, receiving the geographical location of the traffic activity, generating a data record associating the geographical location with the traffic type and the identifier of the particular mobile device, and providing the data record with a time stamp.

In these variants, the data record may be generated substantially in real time with the current traffic activity. In this manner, it can be ensured that the timestamp is actually indicative of the time the current traffic activity takes place.

As said, the monitoring report may include an average number of mobile devices. This average number may be derived by performing the calculation N times during the monitoring period so as to obtain N numbers of mobile devices, and averaging the N numbers of mobile devices thus obtained (e.g., by dividing the summed numbers by N). The individual calculations may be equidistant in time over the monitoring period. Each of the individual calculations may be performed for a dedicated subperiod (including a dedicated point in time) of the monitoring period. A frequency of the calculations may be variable, for example depending on one or more network parameters, such as network load.

The monitoring report may include a value derived from the data records that fulfil the conditions. For example, the monitoring report may include the value in a <type, value> data structure. The type in this data structure may correspond to the monitoring type specified in the monitoring request. The value may be indicative of one or more of: a traffic type, a generic traffic type encompassing multiple traffic types on a lower hierarchy level, a prediction made by a machine learning algorithm based on the data records that fulfil the conditions, and a temporal validity of the prediction, and an average traffic duration. The monitoring type may in some variants be on the same or a higher hierarchy level than a generic traffic type. The monitoring request may include a list of <type, value> data structures, wherein for each value an associated (possibly averaged) number of mobile devices can be reported. In some variants, the monitoring report does not include the number of mobile devices but at least one or more values, optionally in at least one <type, value> data structure.

The monitoring period may in some variants be specified in the monitoring request. In other variants, the monitoring period may be defined by a network operator or otherwise. The monitoring period may be a function of one or more variable network parameters. As an example, the monitoring period may decrease as the network load increases.

The traffic type may be indicative of, or derived from, at least one of an application identifier of an application involved in the network traffic resulting in the traffic activity and a destination domain name of a destination of the network traffic. The application may be running on an application server outside the mobile communications network. The destination domain name may take the form of a Universal Resource Identifier (URI).

For anonymization, two or more traffic types of a lower hierarchy level may be mapped in the calculation to a single generic traffic type on a higher hierarchy level. The number of mobile devices is then calculated across all the traffic types of the lower hierarchy level mapped to the generic traffic indication. The monitoring type specified in the monitoring request may be located on the same or a higher hierarchy level than each generic traffic type.

For example, YouTube traffic activities and Netflix traffic activities may both be mapped to the generic traffic type "video streaming traffic". So when a monitoring request specifies "streaming traffic" (or "video streaming traffic") as monitoring type, mobile devices are counted that have either one of YouTube traffic activities and Netflix traffic activities, which adds to the anonymization of the reported information. Of course, this does not exclude that the monitoring type specified in the monitoring request could also indicate a traffic type as such (e.g., "Netflix traffic").

For example, one or both of different application identifiers and different destination domain names may be mapped, as exemplary lower level traffic types, to a single generic traffic type on the higher hierarchy level. The generic traffic type may then be included as a value in the monitoring report, in addition to the (possibly averaged) number of mobile devices fulfilling the filtering conditions across the generic traffic type.

Each data record may further include a geographical location of the mobile device during the traffic activity. In such a case, the monitoring request may further specify a geographical area to be monitored, and when calculating the number of mobile devices, the following further condition may be considered:
iv) the geographical location of the traffic activity falls within the geographical area.

The geographical location is in one variant defined by a cell identifier. As such, the method may further include consulting a mapping between cell identifiers and geographical areas to determine if the geographical location of the traffic activity falls within the geographical area.

Also provided is computer program product comprising program code portions configured to perform the steps of the method presented herein when the computer program product is executed on a processor. The computer program product may be stored on a computer-readable recording medium.

According to a further aspect, a network apparatus configured to report information included in data records generated for network traffic activities of a plurality of mobile devices is presented, wherein each data record includes a traffic type of a traffic activity of a mobile device, a timestamp of the traffic activity, and an identifier of the mobile device. The network apparatus is configured to receive a monitoring request specifying a monitoring type, and to calculate from the data records a number of mobile devices having, within a given monitoring period, traffic activities that fulfil the following conditions:
i) a traffic type of the traffic activity matches the monitoring type;
ii) a timestamp of the traffic activity falls within the monitoring period; and
iii) traffic activities associated with the same identifier of the mobile device and the same traffic activity are considered only once per monitoring period.

The network apparatus is further configured to return, in response to the monitoring request, a monitoring report that is based on the calculated number of mobile devices.

The network apparatus may be configured as or located on a network node, for example in a radio access network domain or a core network domain. As such, it may be configured as or located on a packet gateway node of a 4th generation mobile communications network. Alternatively, the network apparatus may be configured as or co-located with a network data analytics function of a 5th generation mobile communications network.

Also provided is a network system comprising the network apparatus presented herein, a first gateway node configured to route network traffic for a first set of mobile devices for which information about network traffic activities is to be reported, and a second gateway node configured to route network traffic for a second set of mobile devices for which information about network traffic activities is not to be reported Still further, a network system is provided comprising the network apparatus presented herein, a first gateway node configured to route network traffic for mobile devices for which information about network traffic activities is to be reported, wherein the first gateway node performs routing until a re-routing condition is fulfilled, and further comprising a second gateway node configured to route network traffic for the set of mobile devices after the re-routing condition is fulfilled. In some implementations, the re-routing condition is lapse of a predefined period of time individually started per mobile device.

### Brief Description of the Drawings

Further aspects, details and advantages of the present disclosure will become apparent from the detailed description of exemplary embodiments below and from the drawings, wherein:
- Fig. 1: is a diagram illustrating a network system embodiment of the present disclosure;
- Fig. 2: is a block diagrams illustrating an embodiments of a reporting apparatus in accordance with the present disclosure;
- Fig. 3: is a flow diagram of a method embodiment of the present disclosure;
- Fig. 4: is a diagram illustrating a hierarchical traffic type arrangement;
- Fig. 5: is a table illustrating the sources of input data for the technique presented herein;
- Fig. 6: is a diagram illustrating an LTE/4G network system embodiment of the present disclosure;
- Fig. 7: is a table illustrating the filtering rules for input data; and
- Figs. 8-10: are schematic signalling diagrams illustrating further embodiments of the present disclosure in the context of LTE/4G and 5G network architectures.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

While, for example, some embodiments of the following description focus on an exemplary core network configuration in accordance with specific 4G and 5G specifications, the present disclosure is not limited in this regard. The present disclosure could also be implemented in other cellular or non-cellular wireless communication networks.

Those skilled in the art will further appreciate that the steps, services and functions explained herein may be implemented using individual hardware circuits, using software functioning in conjunction with a programmed microprocessor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by one or more processors.

In the following description of exemplary embodiments, the same reference numerals denote the same or similar components.

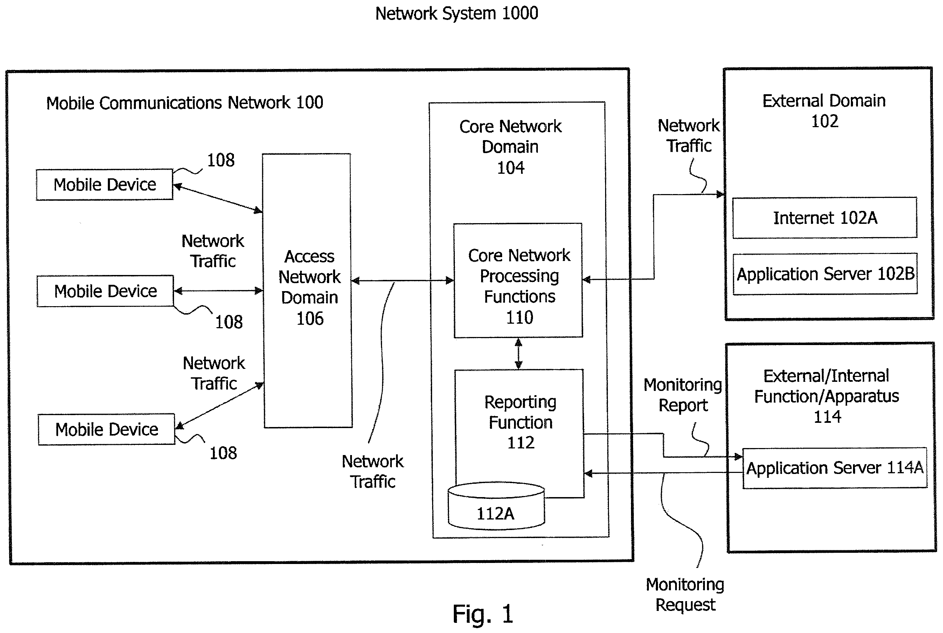

Fig. 1 illustrates an embodiment of a network system 1000 in which the present disclosure can be implemented. As shown in Fig. 1, the network system 1000 comprises a mobile communications network 100 operated by a particular network operator. The network system 1000 further comprises a domain 102 external to the mobile communications network 100. This external domain 102 may comprise one or more external networks, system or components configured to communicate with the mobile communications network 100. An exemplary external network is the Internet 102A, and an exemplary external component is an application server 102B.

The application server 102B in some embodiments belongs to a content provider system operated by a content provider (sometimes also called service provider). The content provider system may provide an application service (such as an instant messaging, IM, service or a video or audio streaming service), possibly over the Internet 102A. In some variants, the application server 102B is configured to provide an Over-The-Top (OTT) application service. Such an OTT application service generates OTT network traffic to transport video content or audio content (typically in a session context).

As shown in Fig. 1, the mobile communications network 100 comprises a core network domain 104 and a wireless access network domain 106. The mobile communications network 100 further comprises a plurality of mobile devices 108. The mobile devices 108 may take the form of User Equipment- (UE-) type mobile devices (e.g., smartphones or tablet computers) and Internet of Things (IoT)-type mobile devices (e.g., cars and wearable devices).

Each of the two domains 104, 106 comprises a user plane for transporting application traffic and a control plane for transporting control signalling. The access network domain 106 may have a cellular or a non-cellular configuration. In some variants, the access network domain 106 comprises multiple base stations or wireless access points. The services provided by the core network domain 102 include core network processing functions 110 for network traffic exchanged between the external domain 102 and the mobile devices 108, via the access network domain 106. Exemplary core network processing functions 110 include Quality of Service enforcement, charging, mobility-related services, and so on.

Also provided by the core network domain 104 is a reporting function 112. The reporting function 112 can be a logical entity or a hardware entity. It can be part of an NWDAF Network Function (NF) in 5G communications networks or of a Packet Gateway (PGW) node in LTE/4G communications networks.

The reporting function 112 is configured to report information included in data records generated for network traffic activities of the mobile devices 108. Such network traffic activities may comprise a particular mobile device 108 streaming video content from a particular application server 102A, visiting over the Internet 102 an online shopping or news website on another application server 102A, and so on.

The data records accessed by the reporting function 112 for filtering and analyzing the information to be reported are in one variant received from the core network processing functions 110. In another variant, these data records are generated locally by the reporting function 112 based on information received from the core network processing functions 110. In the embodiment illustrated in Fig. 1, the data records are stored in a local database 112A of the reporting function, but they may also be stored in a remote database (not shown) within the core network domain 104. The data records accessed by the reporting function 112 for report generation can be historic data records or data records pertaining to ongoing network traffic activities. In the latter case, reporting may substantially occur in real-time with the ongoing traffic activities.

The reporting function 112 is configured to generate its reports responsive to dedicated monitoring requests. As illustrated in Fig. 1, these monitoring requests are received from an apparatus or function 114 located internally in the mobile communications network 100 or externally (i.e., in the external domain 102). In some implementations, the monitoring requests are generated by, and the requested monitoring reports are returned to, an application server 114A.

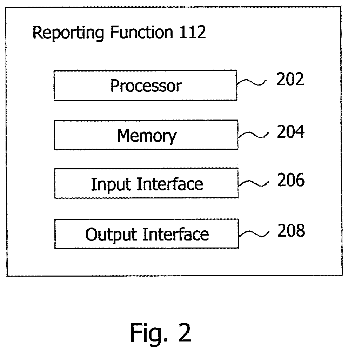

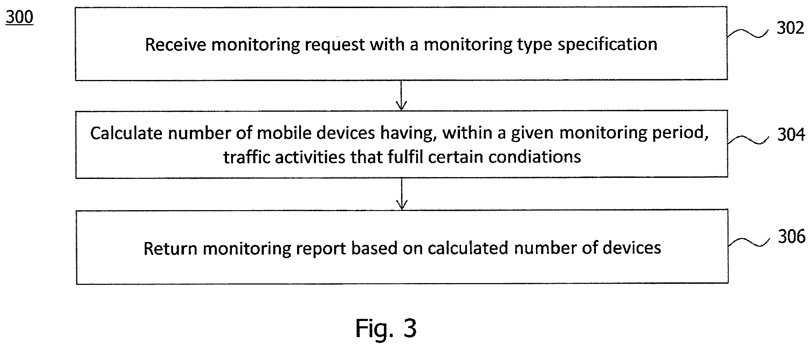

In the following, an apparatus embodiment of the reporting function 112 of Fig. 1 will be described with reference to Fig. 2, and operation of the reporting function 112 will be described with reference to a method embodiment illustrated in flow diagram 300 of Fig. 3.

In the apparatus embodiment illustrated in Fig. 2A, the reporting function 112 comprises a processor 202 and a memory 204 coupled to the processor 202. The memory 204 stores program code that controls operation of the processor 202. As understood herein, a processor, such as processor 202, may be implemented using any processing circuitry and is not limited to, for example, a single processing core but may also have a distributed topology (e.g., using cloud computing resources).

The reporting function 112 further comprises an input interface 206 and an output interface 208. The two interfaces 206, 208 are configured for communication with the core network processing functions 110 on the one hand and the function or apparatus 114 on the other hand.

The processor 202 of the reporting function 112 is configured to report information included in the data records, and the data records are generated for network traffic activities of the plurality of mobile devices 108. Each data record pertains to a particular network traffic activity of a particular mobile device 108. For the particular traffic activity (e.g., a particular content streaming session) multiple data records may be generated (and may be stored in the database 112A). For example, each data record may correspond to a particular PDU generated, in the context of the particular traffic activity, for transmission from the external domain 102 via the core network domain 104 and the access network domain 106 to the particular mobile device 108 (or vice versa).

Each traffic activity is associated with at least one traffic type. The traffic type(s) may be defined by the content provided by a particular application server 102B involved in a particular traffic activity. If, for example, the application server 102B is operated by Netflix, the traffic type may be one (or more) of content streaming, video streaming, and Netflix traffic (in decreasing order of logical hierarchy).

Each data record analysed by the processor 202 in a reporting context includes a traffic type of a particular traffic activity of a particular mobile device 108 (or multiple such types), a timestamp of the traffic activity, and an identifier of the mobile device 108. The identifier may, for example, take the form of an International Mobile Subscriber Identity (IMSI). The data record may include further information, such as a geographical location of the mobile device 108 during the traffic activity. This geographical location may be indicated in the data record via the cell identifier of the particular cell of the access network domain 106 serving the mobile device 108 during the traffic activity.

Now referring to the flow diagram 300 of Fig. 3, operation of the reporting function 112 comprises a step 302 of receiving a monitoring request. The monitoring request is received by the reporting function 112 (e.g., by the processor 202 via the input interface 206, see Fig. 2) from the application server 114A, or any other function or apparatus 114, see Fig. 1. The monitoring requests specifies (at least) a monitoring type. The monitoring type may be selected from a predefined set of monitoring types known to both the reporting function 112 and the application server 114A. The monitoring type specified in the monitoring request may correspond to a particular traffic type (on any hierarchy level, such as content streaming, video streaming, or Netflix traffic). It may be defined such that it can be mapped, by the reporting function 112, on a particular set of one or more traffic types.

In some variants, the monitoring request includes one or more further filtering criteria for the monitoring reports to be generated by the reporting function 112, such as a predefined period of time (monitoring period). The period of time may be indicated in a relative format (e.g., day, week, month) or in an absolute format (e.g., 12 May 2020 - 16:00 to 17:00, or today, or now, or yesterday). The predefined period of time, in particular when indicated in a relative format, may define a reporting frequency. The predefined period of time may be a time instant. When not defined in the monitoring request, the monitoring period may be a default setting of the reporting function 112, or may dynamically be defined (e.g., based on network load, with a higher network load leading to a more frequent reporting and, thus, a shorter monitoring period).

In such or alternative variants, the monitoring request may optionally specify a geographical area to be monitored (i.e., for which the report(s) is (are) to be generated). The specification of the geographical area may include at least one of the following parameters: one or more ZIP codes, one or more cell identifiers, and a name of the geographical area (e.g., a town name).

The method further comprises calculating, by the processor 202, from the data records a number of mobile devices 108 having, within a given monitoring period, traffic activities that fulfil the certain conditions (step 304 in Fig. 3). In one variant, these conditions include:
i) a traffic type of the traffic activity matches the monitoring type specified in the monitoring request;
ii) a timestamp of the traffic activity falls within the monitoring period as specified in the monitoring request or defined otherwise; and
iii) traffic activities associated with the same identifier and the same traffic activity are considered only once per monitoring period.

Condition iii) helps to avoid counting, for a particular mobile device 108 and a particular monitoring period, multiple data records associated with the same traffic activity (and the same traffic type) multiple times and, thus, falsifying the calculation of the actual number of mobile devices 108. Such a falsification may in particular occur in case the data records are of a highly granular nature (e.g., generated on a per-PDU basis), whereas the monitoring period is not an instant in time but has an actual duration. Therefore, multiple data records that concurrently fulfil conditions i) and ii) are only considered once per monitoring period and per mobile device 108. For example, out of a set of data records that fulfil conditions i) and ii), only one data record (e.g., the first within the monitoring period) is actually considered to increment the current count of the number of mobile devices 108, and the other data records are disregarded and, thus, do not lead to a (further) incrementation of that number.

In case the monitoring request further specifies a geographical area to be monitored, the following further condition is considered when calculating the number of mobile devices 108 in step 304:
iv) the geographical location of the traffic activity falls within the geographical area.

In case the geographical location is indicated via a cell identifier in the data records, the processor 202 may consult a mapping between cell identifiers and geographical areas to test condition iv).

The method further comprises returning, in response to the monitoring request, a monitoring report that is based on the calculated number of mobile devices 108 (see step 306 in Fig. 3). For example, the report is output by the processor 202 via the output interface 208 to the function or apparatus 114 (see Figs. 1 and 2). In embodiments that require anonymization, the monitoring report will not include any information allowing to identify a particular mobile device 108 or mobile device group included in reported number of mobile devices 108. In particular, the report will not include any mobile device identifiers and, thus, has been anonymized in this regard. Put another way, the report pertains to a particular group of mobile devices with traffic activities that fulfil certain filtering conditions, without disclosing the mobile devices 108 as such to the function or apparatus 114 (which can thus be located in the external domain 102 without giving rise to any privacy or security concerns).

In one example, the reporting function 112 reports current ("instantaneous") demand as classified by the monitoring type indicated in the monitoring request. In another example, the reporting function 112 uses historical data records to predict future demand (e.g., by use of time-series analysis). Demand can in some implementations be defined as "interest" for specific digital content conforming to the indicated monitoring type. As explained above, the "interest" is quantified by the (e.g., averaged) number of mobile devices 108 for a specific period of time, optionally in a specific geographical area,.

In some variants, only active mobile devices 108 are counted. An active mobile device 108 is a mobile device 108 which has established a Radio Resource Control (RRC) connection and actively transmits and receives data. In case of a 5G communications network 100, the mobile device 108 is characterized by RRC_ACTIVE state. In case of an LTE/4G communications network 100, mobile device 108 is in RRC_CONNECTED state and undergoing a User Data Transaction. The information about the state a mobile device 108 is in is known from information obtained from the access network domain 106. As will be appreciated, only active mobile devices 108 have established sessions and can produce data traffic. Such a type of counting limited to active mobile devices 108 is performed at least for some use cases in which one would like to avoid counting idle mobile devices 108, which were forgotten by their users and are in no position to transmit data.

Therefore, for a given monitoring period of duration t_{d} (as indicated, e.g., in a monitoring request), an interest I for a particular monitoring type and at a particular geographical area can be represented (and reported) as I = {location, UEₙᵤₘ}, where location (optional) is the geographical area and UEₙᵤₘ the (possibly averaged) number of mobile devices 108 in that geographical area (as mobile devices 108 may join and leave the location within t_{d}).

The geographical area can be the actual location of a cell of the access network domain 106 where the mobile devices 108 are attached to, or a bounding box that includes the location of the cell and an approximate coverage area. Also, depending on the implementation, the geographical area can include multiple cells, in which case a central point is chosen or a larger bounding box. The so-called geolocation of a cell serving a mobile device 108 as identified by an operator-unique "cell identifier" or "cell-ID" is known to a network operator system, as that system holds both information about the location of the cell and the mobile devices 108 attached to it. The responsible node in LTE as an exemplary 4G communications network 100 is the Mobility Management Entity (MME), and it is the Access and Mobility Functions (AMF) in a 5G communications network 100.

In order to be valid for a report, a mobile device group must include at least one mobile device 108, for at least a portion of t_{d}, that fulfils the filtering condition(s) defined in the monitoring request. To report an average number of mobile devices 108, mobile devices 108 can be sampled periodically within t_{d} (e.g., for a 100 data points sample, a periodical sampling every t_{d}/100 can be implemented).

In the monitoring report, the interest I can be augmented with one or more so-called insights: I = {location, UEₙᵤₘ, insights}, where insights = list<type, value>. The insights may at least implicitly be defined by the monitoring type specified in the monitoring request (e.g., the parameter "type" in the data structure <type, value> may correspond to the monitoring type specified in the monitoring request. In some variants, UEₙᵤₘ is reported per data structure <type, value>.

Exemplary, non-limiting types of insights and, thus, monitoring types are discussed below.

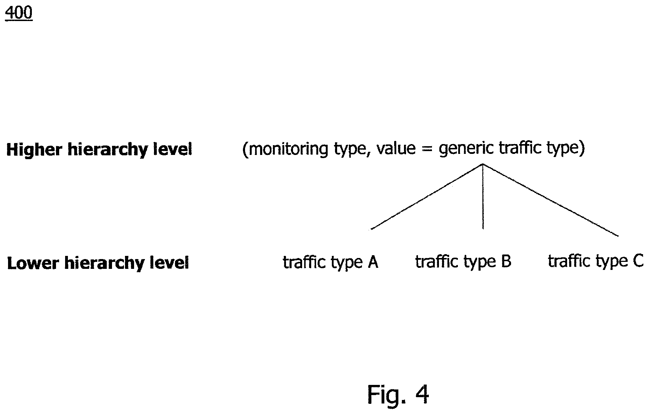

A first insight/monitoring type is called "Popular Destination". To this end, the reporting function 112 analyzes PDU headers to identify (as traffic type) a destination domain name in the PDU. The reporting function may additionally group the destination domain names under a higher-level generic traffic type, as schematically illustrated for a general <type, value> data structure in Fig. 4.

This first insight is about popular PDU destinations (e.g., what generic or specific type(s) of application servers 102B are actually contacted by the mobile devices 108). This analysis can be based on application-layer PDU analysis, and specifically on the domain name of the destination (for example by analysis of HTTP PDU headers). The analysis can use a thesaurus of domain name categories (see, for example, https://tools.zvelo.com - categories could be social media, news sites, vehicle manufacturers, corporate websites, etc.), in order to establish user interest.

Consider the following examples:
- User A of one mobile device 108 visits http://www.techradar.com for at least some time during t_{d}
- User B of another mobile device 108 visits http://www.endadget.com for at least some time during t_{d}
- User C of a still further mobile devics 108 visits http://www.gizmodo.com for at least some time during t_{d}

Since user A, B, C share the same interest as per the definition above, then the associated group has an insight of type "popular destination" and value "technology websites". Note that the corresponding monitoring report may include multiple values for the reporting type "popular destination", wherein for each reporting type a dedicated (e.g., averaged) number of mobile devices 108 is reported. Note further that the identifiers of the mobiles devices 108 (e.g., IMSIs) and explicit website names, which could be used to identify users A, B and C, are not included in the monitoring report.

A second insight/monitoring type is called "Popular Application Categories". Here, PDU headers are analyzed to identify the applications generating the associated traffic activities, and to grouping of applications under one or more generic traffic activities as values. This insight uses application identifiers as traffic types in order to classify the applications in regard to a generic traffic activity, similar to the previous example of "popular destinations" idea. Again, the actual application and the actual mobile device 108 using the application need not be disclosed in the monitoring report. Over time, this insight can give an estimation of what type of applications are popular in a specific area and/or time. Extracting application identifier from possibly encrypted PDUs may be done a specified in https://www.caid a.org/research/trafficanalysis/classification-overview/.

Consider the following examples:
- User A of one mobile device 108 uses the Gmail app for at least some time during t_{d}
- User B of another mobile device 108 uses the Outlook app for at least some time during t_{d}
- User C of a still further mobile device 108 uses the Apple Mail app for at least some time during t_{d}

Since users A, B, C share the same interest as per the definition above, then group has an insight of type "popular application" and value "email". Again, mobile device identifiers (e.g., IMSIs) and explicit application names, which could be used to identify mobile device users, are not exposed.

A third insight/monitoring type is called "Short term group propensity". Here, the traffic generated from/to mobile devices 108 is analyzed. For example, if a user of a mobile device 108 is streaming video from YouTube it is more likely that (s)he is going to continue to request more video traffic for some period of time in the future. If a user is streaming Netflix content, then it is also likely that the user is going to request video traffic but for a longer period of time since video streams on Netflix tend to be longer. Furthermore, even if a mobile device 108 has stopped streaming any video (s)he is more likely start streaming something again compared to a mobile device 108 which was completely idle, or a mobile device 108 that was used for web browsing. Besides temporal correlation. the same mobile device 108 in the same geographical arear might have typical pattern of data consumption. For example, when a user is commuting (s)he might be typically watching a certain television program.

Consider the following examples:
- User A of one mobile device 108 watched a video on Netflix for at least some time for at least some time during t_{d}
- User B of another mobile device 108 watched a video on Youtube for at least some time for at least some time during t_{d}
- User C of a further mobile device 108 watched a video on Amazon for at least some time for at least some time during t_{d}

Since users A, B, C share the same interest as per the definition above, group has an insight of type "group propensity" and three values "video consumption, 88%, 10min", where the percentage denotes a confidence level of a machine learning algorithm for a prediction, and the time denotes how long the prediction is valid for a given group of mobile devices. Again, mobile device identifiers (e.g., IMSIs) and explicit application names, which could be used to identify mobile device users, are not exposed in the resulting monitoring report.

A fourth insight/monitoring type is called "Engagement Aware Group Profile". Here, it is an advanced analytic service which can report aggregated preferences of the group of mobile devices 108 connected to a given cell. The profiles with preferences and interests of all connected mobile devices 108 are combined to create a group profile. When combining profiles, one can weight profiles of different mobile devices 108 based on the level of interaction of the user with his/her mobile device 108. Users who are in a call, watch videos or do active browsing would be much less engaged and even aware about what is going on around them compared to users who keep their mobile devices 108 idle. Interactive users of their mobile devices 108 would contribute less to the group profile in the area. This type of engagement aware group profile information could be of interest for providers of onscreen targeted advertisement. This type of advertisement becomes common in public transport arears like buses, trains, stations, stops, etc. People there are densely concentrated and stay static with respect to advertisement media. Also it is becomes common that ultra-small cells like pico-cells are installed in the public transport areas making UE localization very precise.

Consider the following examples:
- User A made a lot of calls for at least some time during t_{d}
- User B watched a lot of videos for at least some time during t_{d}
- User C browsed the Internet 102A for all the time t_{d}

Since users A, B, C share the same interest as per the definition above, the resulting mobile device group has an insight of type "Engagement Aware Group Profile" and of values "12%, 10min", where the percentage denotes a confidence of a machine learning algorithm regarding how engaged the users in the group will be, and the time indicates how long the prediction is valid for the given mobile device group. Again, mobile device identifiers (e.g., IMSIs) and explicit application names, which could be used to identify mobile device users, are not exposed in the resulting monitoring report.

As has become apparent from the last two examples, the monitoring report may include one value indicative of a prediction made by a machine learning algorithm based on the selected data records that fulfil certain conditions. The monitoring report may include a further value indicative of a temporal validity of the prediction.

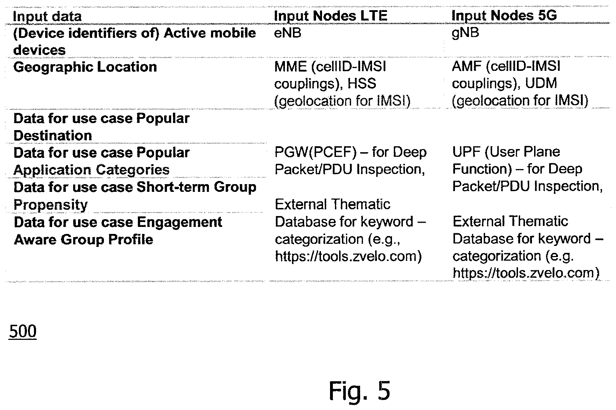

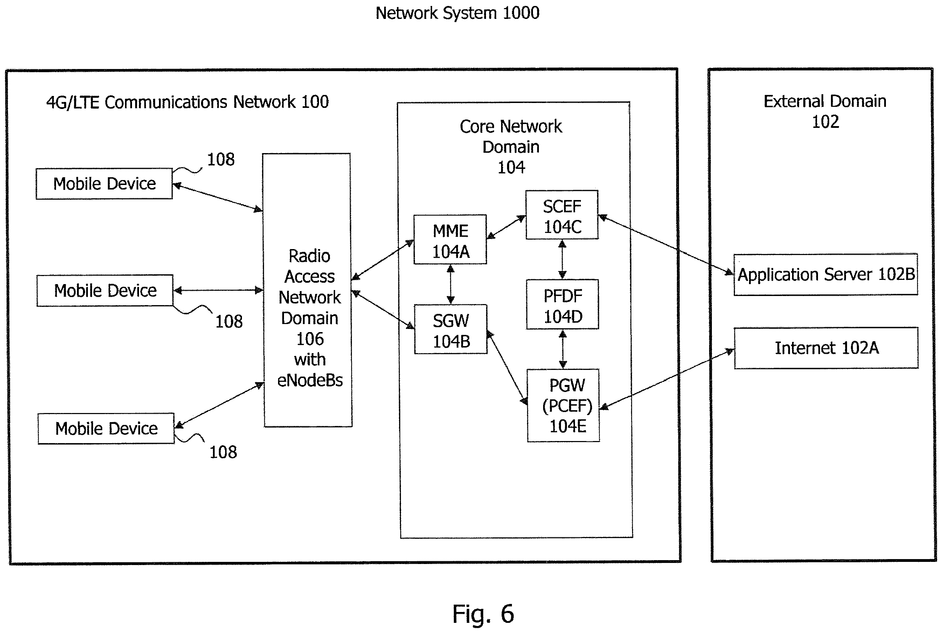

The table 500 of Fig. 5 illustrates the nodes and functions that provide the input data for the reporting function 112 in exemplary LTE/4G and 5G implementations of the mobile communications network 100 and for the four use cases of insights/monitoring types discussed above. Moreover, exemplary implementations of the network system 1000 of Fig. 1 in LTE/4G and 5G communications networks 100 will now be described in greater detail. In this regard, Fig. 6 illustrates an LTE/4G implementation of the network system.

The diagram of Fig. 6 illustrates a typical LTE/4G communications network 100 in operation. In such an implementation, the access network domain 106 will include multiple eNodeBs, and the core network domain 104 an MME 104A, a Serving Gateway (SGF) 104B, an SCEF 104C, a Packet Flow Description Function (PFDF) 104D and a PGW (PCEF) 104E. The functions 104A to 104E may at least partially correspond to the core network processing functions 110 as illustrated in Fig. 1. Similar functions exist for 5G network, for example AMF instead of MME 104A, NEF instead of SCEF 104C, while SGW 104B and PGW 104E are split into SGW-U/SGW-C and PGW-U/PGW-C handling user plane and control plane traffic, respectively.

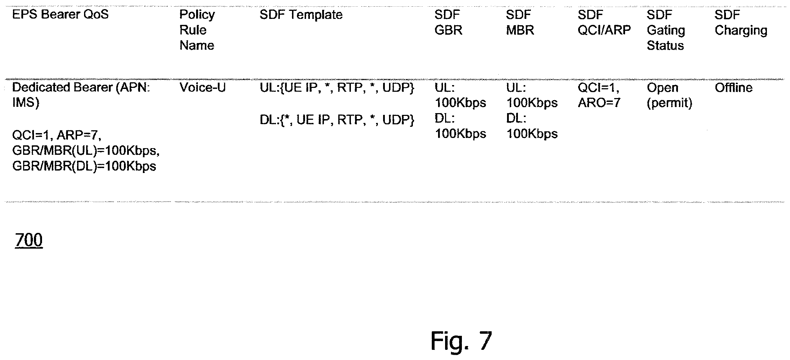

As illustrated in Fig. 6, PGW 104E contains PCEF, which enforces Policy Control and Charging (PCC) rules on the network data traffic received from/sent towards SGW 104B, which in turn receives from/ sends network data towards the Radio Access Network (RAN) domain 106 (with the eNodeBs) and the mobile devices 108 (also called UEs in the LTE/4G context). This means that PCEF (and consequently PGW 104E), inspects the header of every incoming PDU (here: IP data packet) in order to map this PDU to its corresponding service class. This mapping is done using Service Data Flows (SDFs), and inspection is done on the IP (network) layer, and optionally on the transport layer also. An example is illustrated at the table of Fig. 7.

The table of Fig. 7 exemplarily illustrates that all User Datagram Protocol (UDP)/ Real-Time Transport Protocol (RTP) traffic for a specific mobile device 108 (, i.e., traffic received from and sent by that device 108) is filtered and assigned a high-priority data tunnel ("EPS bearer" in 3GPP terminology) with guaranteed 100 Kbps uplink/downlink. In addition to SDFs, it is also possible to supply application filters to PCC rules if an application identifier is provided (the application identifier can denote or be derived from an application-layer protocol, such as HTTP, or a particular application running an application layer protocol such as YouTube or Netflix), and apply the same QoS, charging, etc. policies applying to SDFs.

For each application, there exist a Packet Flow Description (PFD) which contains information on where to route IP traffic under this application ID (e.g., a server-side IP address and port number, or URI/URL, or domain name, etc.). PFDF 104D is a node that allows storing and enforcing PFDs. It has a northbound interface to SCEF 104C and southbound interface to PGW (PCEF) 104E.

On the other hand, SCEF 104C allows an Application Server (AS) 114A - which is a function that may or may not be within mobile network operator's administrative domain (e.g., it could be located on an enterprise server in the external domain 102), to securely subscribe to monitoring events around UE connectivity aspects (such as the ones mentioned in the introduction). The process includes a "Monitoring Request" message submitted to SCEF 104C by AS 114A, and subsequently SCEF 104C internally polls nodes such as MME 104A and PCRF (not shown) in order to retrieve the information requested. When new information is available for an event, SCEF 104C reports it to AS 114A using a "Monitoring Report" message. The "Monitoring Request" message and the "Monitoring Report" message as such are defined in the applicable standard (see, e.g., 3GPP TS 23.682 - 3rd Generation Partnership Project; Technical Specification Group Services and System Aspects; Architecture enhancements to facilitate communications with packet data networks and applications (Release 13)). The same process is also available in 5G communications networks and NEF.

The technical means in the LTE/4G communications network 100 of Fig. 6 thus permit to capture and filter network data traffic. However, the current mechanisms for exposing information about this network data traffic to third parties (e.g., in th external domain 102) are limited to policy management for that traffic, and not performing any analysis of traffic patterns themselves.

To overcome these limitations, a new function called User Data Insight Generator Function (UDIGF) is proposed to be added to the core network domain 104. UDIGF may implement some or all of the operations of the reporting function 112 discussed above and, thus, will in the following be denoted by the same reference numeral in signalling diagrams 8, 9A and 9B. UDGIF 112 is responsible for generating insights from user data flows, anonymizing these insights and exposing them, for example via SCEF 104C, to interested third parties. UDIGF 112 may be placed between PGW (PCEF) 104E and SCEF 104C, for example collocated with PFDF 104D.

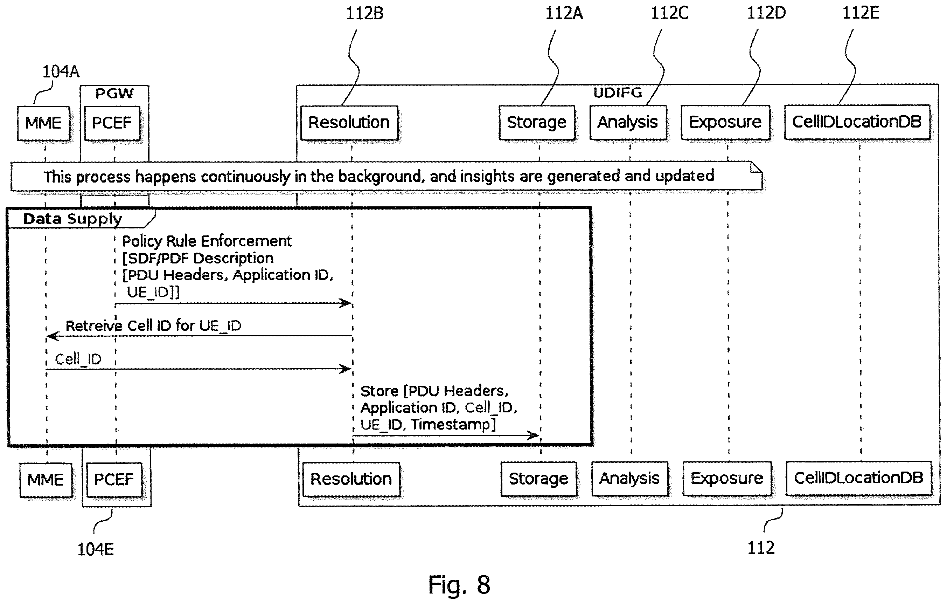

UDIGF 112 comprises five elements, or sub-functions, 112A to 112E as illustrated in Fig. 8.

A resolution sub-function 112B retrieves policy rule enforcement actions from PCEF on PGW 104E. Whenever a PDU (e.g., an IP packet) from a mobile device 108 or the Internet 102A (i.e., towards a mobile device 108) arrives, PCEF triggers a policy action. This can be for example a policy triggered from an SDF as shown in the table of Fig. 7, where IP packet headers are scanned, or it can be a PFD triggered where application headers are scanned. In any case, the originating is sent in addition to packet headers and - in case of an application - information as to which application the packet belongs to.

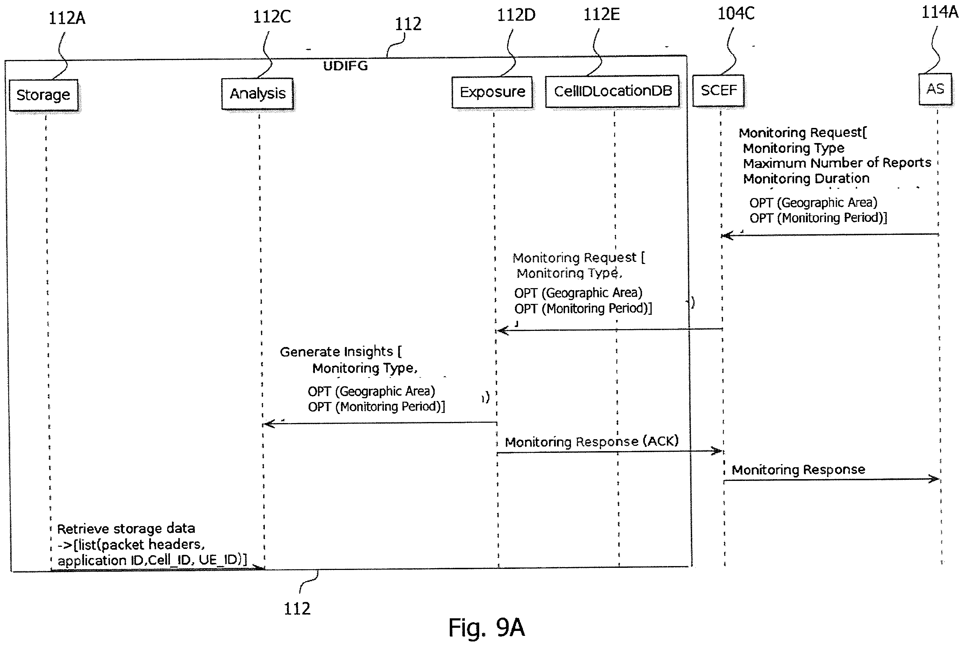

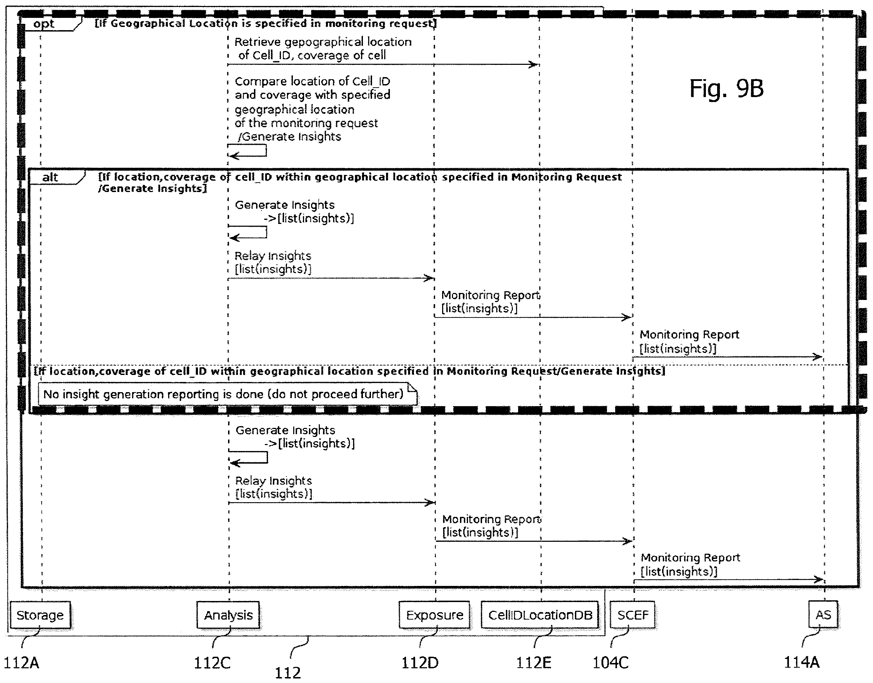

A storage sub-function 112A (realized, e.g., in the form of a database 112A as illustrated in Fig. 1) stores the Policy Rule Enforcement requests described previously, but also information on insights generated (as will be discussed with reference to Figs. 9A and 9B below).

An analysis sub-function 112C analyzes the generated policy rules, as stored in by the storage sub-function 112A, and produces insights. The produced insights are then provided to an exposure sub-function 112D for dispatchment to SCEF 104C and subsequently to AS 114A. The exposure sub-function 112D implements a monitoring request/monitoring report interface (e.g., similar to functionality in T6a as described in 3GPP TS 23.682). Specifically, the exposure sub-function 112D retrieves analysis insights and reports them to a requesting AS 114A.

A geographical database sub-function 112E provides a mapping between cell identifiers and geographical locations (as defined, e.g., by ZIP codes, geographical names, or otherwise).

As illustrated in the signalling diagram of Fig. 8, PCEF on PGW 104E will send to the resolution sub-function 112B an Policy Rule Enforcement message every time a PDU (e.g., an IP data packet) is received. This message will include one or both of PDU header(s) and application identifier(s) as well as the identifier of the mobile device 108 (e.g., IMSI) to which the PDU is addressed or by which it was sent. PDU header(s) and application identifier(s), being indicative of traffic type(s) are measured (using, for example, deep packet inspection as explained above). The Policy Rule Enforcement message can therefore also be considered to constitute measurement report.

Subsequently, resolution sub-function 112B will ask MME 104A (AMF in 5G) about the cell identifier (Cell ID) associated with the identifier of the mobile device 108 indicated in the Policy Rule Enforcement message. This information is known to the MME 104A as whenever a mobile device 108 attaches to the RAN domain 106 and/or handovers from another cell, this information is part of the authentication process (LTE Attach) and will be stored by MME 104A. For an open-source database of cell identifiers, see https:/opencellid.org - the idea is that the cell identifier is also a designator of the geographical location of the mobile device 108 (with some granularity). Once the cell identifier is retrieved, then the information provided by PCEF and the cell identifier are timestamped with current date and time and stored as a data record in the in storage sub-function 112A. In use cases where the geographical location of the mobile device 108 is not of importance, the Policy Rule Enforcement message (or information included therein) may directly be associated with a time stamp and stored as a data record in the in storage sub-function 112A.

In parallel to the data acquisition process as illustrated in Fig. 8, UDIGF 112 accepts monitoring requests (e.g., from third parties or the network operator owing UDIGF 112) and generates anonymous insights on the information stored as a data record in the in storage sub-function 112A. The process is illustrated in the signalling diagrams of Figs. 9A and 9B.

The exposure sub-function 112D of UDIGF 112 fully implements the monitoring request/monitoring response and monitoring report publish/subscribe interface as defined in 3GPP TS 23.682. MME 104A also implements the same type of interface.

As shown in Fig. 9A, the process starts with the AS 114A sending a monitoring request to SCEF 104C, which forwards the monitoring request to the exposure sub-function 112D (see receiving step 302 in Fig. 3). The monitoring request at least specifies a monitoring type and may define further parameters, such as a maximum number of reports desired, a monitoring duration (e.g., defining an end of the monitoring process, such as in one week), a geographical area (e.g., Berlin or a certain ZIP code) and a monitoring period (that may define the monitoring granularity, for example the period of monitoring time to be covered by a single monitoring report, such as 1 minute, 2 hours or 3 days). The maximum number of reports desired and the monitoring duration will in the following not be considered further.

The exposure sub-function 112D forwards the monitoring type (together with the optional parameters monitoring period and geographical area) with a Generate Insights message to the analysis sub-function 112C. The analysis sub-function 112C acknowledges that message back to SCEF 104C, which forwards the acknowledgement to the requesting AS 114A.

As explained above, the monitoring type indicated as a code in the monitoring request corresponds to the insight generated. The exemplary insights supported in this embodiment are (description - monitoring type code in quotation):
- Popular Request destinations: "nr-requests"
- Popular application categories: "ue-contextpopularity"
- Short term group propensity: "ue-shorttermpropensity"
- Engagement aware group profile: "ue-groupprofile "

From this point and onwards, the analysis sub-function 112C performs analysis on one or both of incoming (current) and historical data to generate insights. This process can be asynchronous to the monitoring request, meaning that an analysis can take place whenever a new data record is available to the storage sub-function 112A, or periodically (e.g., every 2 minutes, depending on the monitoring period specified on the monitoring request or otherwise). As said, the monitoring request may also specify the duration of the monitoring (e.g., in hours or days).

As part of the analysis, the analysis sub-function 112C retrieves the data records to be analyzed from the storage sub-function 112A. The data records to be retrieved may be defined, inter alia, by the monitoring period. As indicated in the last signalling step of Fig. 9A, the data records may be retrieved in the form of a list, with each list entry defining a data record associating PDU header(s) and/or application identifier(s) (i.e., traffic type(s)) of a particular traffic activity, a mobile device identifier ("UE ID") and a geographic location ("Cell ID") of the mobile device 108 during the traffic activity.

Now reference is made to the signalling diagram of Fig. 9B. This signalling diagram essentially describes an LTE/4G implementation of steps 304 and 306 of Fig. 3
In case a geographical area was specified in the monitoring request, the analysis sub-function 112C, for each data record (list entry), consults the geographical database sub-function 112E to determine, for the cell identifier in the data record, the associated geographical location. The analysis sub-function 112C then compares the geographical location thus determined with the geographical area as specified in the monitoring request and generates the insights (as discussed above) only on the basis of data records having cell identifiers that map on geographical locations included in the geographical area. The insight generation will be performed in accordance with the specified monitoring type as explained above (see also step 304 in Fig. 3). The resulting list of one or more insights will then be relayed to the exposure sub-function 112D, which relays it in a monitoring report to SCEF 104C. SCEF 104C will forward the monitoring report to the requesting AS 114A (see also step 306 in Fig. 3). Evidently, insight generation cannot be performed if no data records match the geographical area indicated in the monitoring request. Moreover, if no geographical area is specified in the monitoring request, insight generation will be performed for all available data records (e.g., over the complete network of a particular network operator).

The above idea discussed introducing UDIGF 112 and extending PGW reporting capabilities to report information on every PDU filtered by PCEF. Evidently, this kind of filtering and reporting puts computational overhead on PGW 104E and can affect its performance, thus potentially impacting network traffic flows on the data plane. One idea in order to address this issue is to use two PGWs 104E, one for "regular" network data traffic and another for traffic analysis and insight generation as discussed herein (see Fig. 8). For example, network data traffic for certain mobile devices 108 (e.g., certain categories of IMSIs) would be routed through the latter gateway, while the remaining mobile devices 108 (remaining IMSIs) can be served by former gateway as it is standard practice today. The aforementioned categories of IMSIs could for example include private individuals who have given their consent to have their network data traffic analysed in exchange for some reward (e.g., free data, SMS and/or calls from a particular mobile operator network 100).

Another idea would be to add a grace period during initial attach of a mobile device 108 to a particular mobile operator network 100. This grace period could apply to all mobile devices 108 and can be any predefined period of time between, for example, a few minutes to a few hours. During this grace period, the traffic of a particular mobile device 108 is routed through the PGW 104E that reports the filtered network data traffic as shown in Fig. 8, and as soon as grace period ends, the network data traffic is rerouted through the "normal" PGW. In this way, every mobile device 108 is given a change to participate in the data analysis by supplying its traffic activities. The grace period may be repeated periodically or after a handover to another cell (e.g., every second or third handover). Instead of a grace period, the rerouting could also be performed dependent on another condition, such as network traffic load (wherein the rerouting takes place when a predefined load threshold is exceeded).

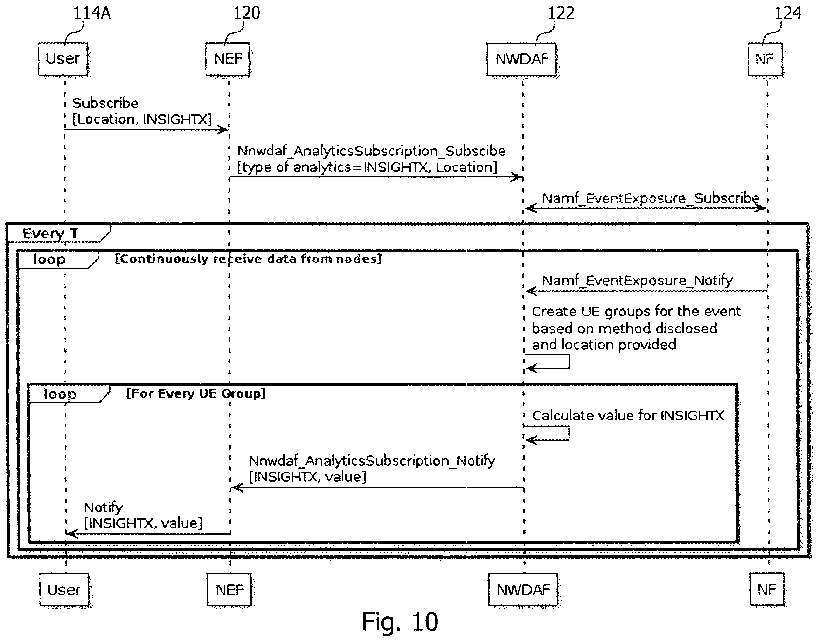

Fig. 10 illustrates an implementation for 5G communications networks 100 similar to the implementation for LTE/4G communications networks described above. The idea is that a third party (illustrated as User 114A) subscribes to updates of associated events to an NEF 120, which subscribes to an NWDAF 124, which in turn requests data records from relevant Network Functions (NFs) 124 (see table 500 of Fig. 5).

The data records are provided asynchronously when available. When NWDAF 124 receives all data records for a period of time equal to t_{d} (as outlined above), it processes those data records according to the use case (insight/monitoring type) as discussed above and reports to SCEF (not shown), which then notifies the User 114A. The notification payload includes information about the insight and an associated value. Note that it is possible for to subscribe to more than one insight.

## Claims

1. A method of reporting information included in data records generated for network traffic activities of a plurality of mobile devices (108), each data record including a traffic type of a traffic activity of a mobile device (108), a timestamp of the traffic activity, and an identifier of the mobile device (108), the method comprising:
receiving (302) a monitoring request specifying a monitoring type;
calculating (304) from the data records a number of mobile devices (108) having, within a given monitoring period, traffic activities that fulfil the following conditions:
i) a traffic type of the traffic activity matches the monitoring type;
ii) a timestamp of the traffic activity falls within the monitoring period; and
iii) traffic activities associated with the same identifier of the mobile device (108) and the same traffic type are considered only once per monitoring period; and
returning (306), in response to the monitoring request, a monitoring report that is based on the calculated number of mobile devices (108).

2. The method of claim 1, wherein
to fulfil condition iii), multiple data records that concurrently fulfil conditions i) and ii) are only considered once for a given mobile device (108).

3. The method of claim 1 or 2, wherein
each traffic activity comprises transmission of a series of protocol data units, PDUs, and wherein one data record has been generated from one PDU.

4. The method of claim 3, wherein
each PDU has a PDU header and a PDU payload, and wherein the traffic type included in a particular data record is determined from at least one of PDU header inspection and PDU payload inspection.

5. The method of any of claim 3 or 4, wherein
the PDUs are selected from Internet Protocol, IP, PDUs and Hypertext Transfer Protocol, HTTP, PDUs.

6. The method of any of the preceding claims, wherein
generating an individual one of the data records comprises
receiving a measurement report indicating, for a current traffic activity of a particular mobile device (108), a traffic type of the traffic activity and an identifier of the mobile device (108);
requesting, based on the identifier of the mobile device (108), a geographical location of the traffic activity;
receiving the geographical location of the traffic activity;
generating a data record associating the geographical location with the traffic type and the identifier of the particular mobile device; and
providing the data record with a time stamp.

7. The method of claim 6, wherein
the data record is generated substantially in real time with the current traffic activity.

8. The method of any of the preceding claims, wherein
the monitoring report includes an average number of mobile devices (108) derived by
- performing the calculation N times during the monitoring period so as to obtain N numbers of mobile devices (108); and
- averaging the N numbers of mobile devices thus obtained.

9. The method of claim 8, wherein
the individual calculations are equidistant in time over the monitoring period.

10. The method of claim 8 or 9, wherein
each of the individual calculations is performed for a dedicated subperiod of the monitoring period.

11. The method of any of the preceding claims, wherein
the monitoring report includes a value derived from the data records that fulfil the conditions.

12. The method of claim 11, wherein
the value is indicative of one or more of: a traffic type, a generic traffic type encompassing multiple traffic types on a lower hierarchy level, a prediction made by a machine learning algorithm based on the data records that fulfil the conditions, a temporal validity of the prediction, and an average traffic duration.

13. The method of any of the preceding claims, wherein
the monitoring period is specified in the monitoring request.

14. The method of any of the preceding claims, wherein
the monitoring period is a function of one or more variable network parameters.

15. The method of any of the preceding claims, wherein
the traffic type is indicative of, or derived from, at least one of an application identifier of an application (102B) involved in the network traffic and a destination domain name of a destination of the network traffic.

16. The method of any of the preceding claims, wherein,
for anonymization, two or more traffic types on a lower hierarchy level are mapped in the calculation to a single generic traffic type on a higher hierarchy level.

17. The method of claims 15 and 16, wherein,
one or both of different application identifiers and different destination domain names are mapped, as lower level traffic types, to a single generic traffic type on the higher hierarchy level.

18. The method of any of the preceding claims, wherein
each data record further includes a geographical location of the mobile device (108) during the traffic activity; wherein
the monitoring request further specifies a geographical area to be monitored; and wherein,
when calculating the number of mobile devices, the following further condition is considered:
iv) the geographical location of the traffic activity falls within the geographical area.

19. The method of claim 18, wherein
the geographical location is defined by a cell identifier.

20. The method of claim 19, comprising
consulting a mapping between cell identifiers and geographical areas to determine if the geographical location of the traffic activity falls within the geographical area.

21. A computer program product comprising program code portions configured to perform the steps of the method of any of claims 1 to 20 when the computer program product is executed on a processor.

22. The computer program product of claim 21, stored on a computer-readable recording medium.

23. A network apparatus (112) configured to report information included in data records generated for network traffic activities of a plurality of mobile devices (108), each data record including a traffic type of a traffic activity of a mobile device (108), a timestamp of the traffic activity, and an identifier of the mobile device, the network apparatus being configured to:
receive a monitoring request specifying a monitoring type;
calculate from the data records a number of mobile devices (108) having, within a given monitoring period, traffic activities that fulfil the following conditions:
i) a traffic type of the traffic activity matches the monitoring type;
ii) a timestamp of the traffic activity falls within the monitoring period; and
iii) traffic activities associated with the same identifier of the mobile device (108) and the same traffic type are considered only once per monitoring period; and
return, in response to the monitoring request, a monitoring report that is based on the calculated number of mobile devices (108).

24. The network apparatus of claim 23, configured as or located on a packet gateway node of a 4^{th} generation mobile communications network (100).

25. The network apparatus of claim 23, configured as or co-located with a network data analytics function of a 5^{th} generation mobile communications network (100).

26. A network system (1000) comprising
the network apparatus (112) of any of claims 23 to 25; and
a first gateway node configured to route network traffic for a first set of mobile devices (108) for which information about network traffic activities is to be reported; and
a second gateway node configured to route network traffic for a second set of mobile devices (108) for which information about network traffic activities is not to be reported

27. A network system (1000) comprising
the network apparatus (112) of any of claims 23 to 25; and
a first gateway node configured to route network traffic for mobile devices (108) for which information about network traffic activities is to be reported, wherein the first gateway note performs routing until a re-routing condition is fulfilled; and
a second gateway node configured to route network traffic for the set of mobile devices (108) after the re-routing condition is fulfilled.

28. The network system of claim 27, wherein
the re-routing condition is lapse of a predefined period of time individually started per mobile device (108).

## Patentansprüche

1. Verfahren zum Melden von Informationen, die in Datensätzen, die für Netzwerkverkehrsaktivitäten einer Vielzahl mobiler Vorrichtungen (108) erzeugt werden, beinhaltet sind, wobei jeder Datensatz eine Verkehrsart einer Verkehrsaktivität einer mobilen Vorrichtung (108), einen Zeitstempel der Verkehrsaktivität und eine Kennung der mobilen Vorrichtung (108) beinhaltet, wobei das Verfahren Folgendes umfasst:
Empfangen (302) einer Überwachungsanforderung, die eine Überwachungsart spezifiziert;
Berechnen (304), aus den Datensätzen, einer Anzahl mobiler Vorrichtungen (108), die innerhalb eines gegebenen Überwachungszeitraums Verkehrsaktivitäten aufweisen, die die folgenden Bedingungen erfüllen:
i) eine Verkehrsart der Verkehrsaktivität stimmt mit der Überwachungsart überein;
ii) ein Zeitstempel der Verkehrsaktivität fällt innerhalb des Überwachungszeitraums; und
iii) Verkehrsaktivitäten, die mit der gleichen Kennung der mobilen Vorrichtung (108) und der gleichen Verkehrsart assoziiert sind, werden nur einmal pro Überwachungszeitraum berücksichtigt; und Ausgeben (306), als Reaktion auf die Überwachungsanforderung, eines Überwachungsberichts, der auf der berechneten Anzahl mobiler Vorrichtungen (108) basiert.

2. Verfahren nach Anspruch 1, wobei,
um die Bedingung iii) zu erfüllen, mehrere Datensätze, die gleichzeitig die Bedingungen i) und ii) erfüllen, für eine gegebene mobile Vorrichtung (108) nur einmal berücksichtigt werden.

3. Verfahren nach Anspruch 1 oder 2, wobei
jede Verkehrsaktivität eine Übertragung einer Reihe von Protokolldateneinheiten, PDUs, umfasst und wobei ein Datensatz aus einer PDU erzeugt worden ist.

4. Verfahren nach Anspruch 3, wobei
jede PDU einen PDU-Header und eine PDU-Nutzlast aufweist und wobei die Verkehrsart, die in einem konkreten Datensatz beinhaltet ist, aus mindestens einer von einer PDU-Headerinspektion und einer PDU-Nutzlastinspektion bestimmt wird.

5. Verfahren nach einem der Ansprüche 3 oder 4, wobei
die PDUs aus Internetprotokoll-PDUs, IP-PDUs, und Hypertexttransferprotokoll-PDUs, HTTP-PDUs, ausgewählt sind.

6. Verfahren nach einem der vorhergehenden Ansprüche, wobei das Erzeugen eines einzelnen der Datensätze Folgendes umfasst:
Empfangen eines Messungsberichts, der für eine aktuelle Verkehrsaktivität einer konkreten mobilen Vorrichtung (108) eine Verkehrsart der Verkehrsaktivität und eine Kennung der mobilen Vorrichtung (108) angibt;
Anfordern, basierend auf der Kennung der mobilen Vorrichtung (108), eines geographischen Standorts der Verkehrsaktivität;
Empfangen des geographischen Standorts der Verkehrsaktivität;
Erzeugen eines Datensatzes, der den geographischen Standort mit der Verkehrsart und der Kennung der konkreten mobilen Vorrichtung assoziiert; und
Bereitstellen eines Zeitstempels zu dem Datensatz.

7. Verfahren nach Anspruch 6, wobei
der Datensatz im Wesentlichen in Echtzeit mit der aktuellen Verkehrsaktivität erzeugt wird.

8. Verfahren nach einem der vorhergehenden Ansprüche, wobei der Überwachungsbericht eine gemittelte Anzahl mobiler Vorrichtungen (108) beinhaltet, die durch Folgendes abgeleitet wird:
- N-maliges Durchführen der Berechnung während des Überwachungszeitraums, um N Anzahlen mobiler Vorrichtungen (108) zu erlangen; und
- Mitteln der N Anzahlen mobiler Vorrichtungen, die solchermaßen erlangt werden.

9. Verfahren nach Anspruch 8, wobei
die einzelnen Berechnungen in dem Überwachungszeitraum zeitlich äquidistant sind.

10. Verfahren nach Anspruch 8 oder 9, wobei
jede der einzelnen Berechnungen während eines dedizierten Teilzeitraums des Überwachungszeitraums durchgeführt wird.

11. Verfahren nach einem der vorhergehenden Ansprüche, wobei der Überwachungsbericht einen Wert beinhaltet, der aus den Datensätzen, die die Bedingungen erfüllen, abgeleitet ist.

12. Verfahren nach Anspruch 11, wobei der Wert eine oder mehrere von Folgendem angibt: einer Verkehrsart, einer generischen Verkehrsart, die mehrere Verkehrsarten auf einer niedrigeren hierarchischen Ebene einschließt, einer Vorhersage, die basierend auf den Datensätzen, die die Bedingungen erfüllen, durch einen Algorithmus für maschinelles Lernen erstellt wird, einer zeitlichen Gültigkeit der Vorhersage und einer gemittelten Verkehrsdauer.

13. Verfahren nach einem der vorhergehenden Ansprüche, wobei der Überwachungszeitraum in der Überwachungsanforderung spezifiziert wird.

14. Verfahren nach einem der vorhergehenden Ansprüche, wobei der Überwachungszeitraum eine Funktion eines oder mehrerer Netzwerkparameter ist.

15. Verfahren nach einem der vorhergehenden Ansprüche, wobei die Verkehrsart mindestens eines einer Anwendungskennung einer Anwendung (102B), die an dem Netzwerkverkehr beteiligt ist, und eines Zieldomänennamens eines Zieles des Netzwerkverkehrs angibt oder von ihnen abgeleitet ist.

16. Verfahren nach einem der vorhergehenden Ansprüche, wobei zur Anonymisierung zwei oder mehr Verkehrsarten auf einer niedrigeren hierarchischen Ebene in der Berechnung einer einzigen generischen Verkehrsart auf einer höheren hierarchischen Ebene zugeordnet werden.

17. Verfahren nach Anspruch 15 und 16, wobei eines oder beide von unterschiedlichen Anwendungskennungen und unterschiedlichen Zieldomänennamen als Verkehrsarten einer niedrigeren Ebene einer einzigen generischen Verkehrsart auf der höheren hierarchischen Ebene zugeordnet werden.

18. Verfahren nach einem der vorhergehenden Ansprüche, wobei jeder Datensatz ferner einen geographischen Standort der mobilen Vorrichtung (108) während der Verkehrsaktivität beinhaltet; wobei
die Überwachungsanforderung ferner einen zu überwachenden geographischen Bereich spezifiziert; und wobei
beim Berechnen der Anzahl mobiler Vorrichtungen die folgende weitere Bedingung berücksichtigt wird:
iv) der geographische Standort der Verkehrsaktivität fällt innerhalb des geographischen Bereichs.

19. Verfahren nach Anspruch 18, wobei
der geographische Standort durch eine Zellenkennung definiert wird.

20. Verfahren nach Anspruch 19, umfassend
Hinzuziehen einer Zuordnung zwischen Zellenkennungen und geographischen Bereichen, um zu bestimmen, ob der geographische Standort der Verkehrsaktivität innerhalb des geographischen Bereichs fällt.

21. Computerprogrammprodukt, umfassend Programmcodeabschnitte, die dazu konfiguriert sind, die Schritte des Verfahrens nach einem der Ansprüche 1 bis 20 durchzuführen, wenn das Computerprogrammprodukt auf einem Prozessor ausgeführt wird.

22. Computerprogrammprodukt nach Anspruch 21, das auf einem computerlesbaren Aufzeichnungsmedium gespeichert ist.

23. Netzwerkgerät (112), das dazu konfiguriert ist, Informationen zu melden, die in Datensätzen, die für Netzwerkverkehrsaktivitäten einer Vielzahl mobiler Vorrichtungen (108) erzeugt werden, beinhaltet sind, wobei jeder Datensatz eine Verkehrsart einer Verkehrsaktivität einer mobilen Vorrichtung (108), einen Zeitstempel der Verkehrsaktivität und eine Kennung der mobilen Vorrichtung beinhaltet, wobei das Netzwerkgerät zu Folgendem konfiguriert ist:
Empfangen einer Überwachungsanforderung, die eine Überwachungsart spezifiziert;
Berechnen, aus den Datensätzen, einer Anzahl mobiler Vorrichtungen (108), die innerhalb eines gegebenen Überwachungszeitraums Verkehrsaktivitäten aufweisen, die die folgenden Bedingungen erfüllen:
i) eine Verkehrsart der Verkehrsaktivität stimmt mit der Überwachungsart überein;
ii) ein Zeitstempel der Verkehrsaktivität fällt innerhalb des Überwachungszeitraums; und
iii) Verkehrsaktivitäten, die mit der gleichen Kennung der mobilen Vorrichtung (108) und der gleichen Verkehrsart assoziiert sind, werden nur einmal pro Überwachungszeitraum berücksichtigt; und
Ausgeben, als Reaktion auf die Überwachungsanforderung, eines Überwachungsberichts, der auf der berechneten Anzahl mobiler Vorrichtungen (108) basiert.

24. Netzwerkgerät nach Anspruch 23, das als ein Paket-Gateway-Knoten eines mobilen Kommunikationsnetzwerks (100) der 4. Generation konfiguriert ist oder sich darauf befindet.

25. Netzwerkgerät nach Anspruch 23, das als eine Netzwerkdatenanalysefunktion eines mobilen Kommunikationsnetzwerks (100) der 5. Generation konfiguriert oder mit einer solchen gemeinsam befindlich ist.

26. Netzwerksystem (1000), umfassend
das Netzwerkgerät (112) nach einem der Ansprüche 23 bis 25; und einen ersten Gateway-Knoten, der dazu konfiguriert ist, einen Netzwerkverkehr für einen ersten Satz mobiler Vorrichtungen (108), für den Informationen über Netzwerkverkehrsaktivitäten zu melden sind, zu routen; und
einen zweiten Gateway-Knoten, der dazu konfiguriert ist, einen Netzwerkverkehr für einen zweiten Satz mobiler Vorrichtungen (108), für die Informationen über Netzwerkaktivitäten nicht zu melden sind, zu routen.

27. Netzwerksystem (1000), umfassend
das Netzwerkgerät (112) nach einem der Ansprüche 23 bis 25; und
einen ersten Gateway-Knoten, der dazu konfiguriert ist, einen Netzwerkverkehr für mobile Vorrichtungen (108), für die Informationen über Netzwerkverkehrsaktivitäten zu melden sind, zu routen, wobei der erste Gateway-Knoten das Routen durchführt, bis eine Bedingung für erneutes Routen erfüllt wird; und
einen zweiten Gateway-Knoten, der dazu konfiguriert ist, einen Netzwerkverkehr für den Satz mobiler Vorrichtungen (108) zu routen, nachdem die Bedingung für erneutes Routen erfüllt ist.

28. Netzwerksystem nach Anspruch 27, wobei
die Bedingung für erneutes Routen Verstreichen eines vordefinierten Zeitraums ist, der pro mobile Vorrichtung (108) einzeln gestartet wird.

## Revendications

1. Procédé de rapport d'informations incluses dans des enregistrements de données générés pour des activités de trafic de réseau d'une pluralité de dispositifs mobiles (108), chaque enregistrement de données comprenant un type de trafic d'une activité de trafic d'un dispositif mobile (108), un horodatage de l'activité de trafic et un identifiant du dispositif mobile (108), le procédé comprenant :
la réception (302) d'une demande de surveillance spécifiant un type de surveillance ;
le calcul (304) à partir des enregistrements de données d'un nombre de dispositifs mobiles (108) ayant, dans une période de surveillance donnée, des activités de trafic qui remplissent les conditions suivantes :
i) un type de trafic de l'activité de trafic correspond au type de surveillance ;
ii) un horodatage de l'activité de trafic tombe dans la période de surveillance ; et
iii) les activités de trafic associées au même identifiant du dispositif mobile (108) et au même type de trafic ne sont prises en compte qu'une fois par période de surveillance ; et
le renvoi (306), en réponse à la demande de surveillance, d'un rapport de surveillance qui est basé sur le nombre calculé de dispositifs mobiles (108).

2. Procédé selon la revendication 1, dans lequel,
pour remplir la condition iii), plusieurs enregistrements de données qui remplissent simultanément les conditions i) et ii) ne sont pris en compte qu'une seule fois pour un dispositif mobile donné (108).

3. Procédé selon la revendication 1 ou 2, dans lequel
chaque activité de trafic comprend la transmission d'une série d'unités de données de protocole, PDU, et dans lequel un enregistrement de données a été généré à partir d'une PDU.

4. Procédé selon la revendication 3, dans lequel
chaque PDU a un en-tête de PDU et une charge utile de PDU, et dans lequel le type de trafic inclus dans un enregistrement de données particulier est déterminé à partir d'au moins une inspection d'en-tête de PDU et d'une inspection de charge utile de PDU.

5. Procédé selon l'une quelconque des revendications 3 ou 4, dans lequel
les PDU sont sélectionnées parmi les PDU de protocole Internet, IP et les PDU de protocole de transfert hypertexte, HTTP.

6. Procédé selon l'une quelconque des revendications précédentes, dans lequel
la génération d'un enregistrement de données individuel comprend la réception d'un rapport de mesure indiquant, pour une activité de trafic actuelle d'un dispositif mobile particulier (108), un type de trafic de l'activité de trafic et un identifiant du dispositif mobile (108) ;
la demande, sur la base de l'identifiant du dispositif mobile (108), d'une localisation géographique de l'activité de trafic ;
la réception de la localisation géographique de l'activité de trafic ;
la génération d'un enregistrement de données associant la localisation géographique au type de trafic et à l'identifiant du dispositif mobile particulier ; et
la fourniture de l'enregistrement de données avec un horodatage.

7. Procédé selon la revendication 6, dans lequel
l'enregistrement de données est généré sensiblement en temps réel avec l'activité de trafic actuelle.

8. Procédé selon l'une quelconque des revendications précédentes, dans lequel
le rapport de surveillance comprend un nombre moyen de dispositifs mobiles (108) obtenu en
- effectuant le calcul N fois pendant la période de surveillance de manière à obtenir N nombres de dispositifs mobiles (108) ; et
- en prenant la moyenne des N nombres de dispositifs mobiles ainsi obtenus.

9. Procédé selon la revendication 8, dans lequel
les calculs individuels sont équidistants dans le temps sur la période de surveillance.

10. Procédé selon la revendication 8 ou 9, dans lequel
chacun des calculs individuels est effectué pendant une sous-période dédiée de la période de surveillance.

11. Procédé selon l'une quelconque des revendications précédentes, dans lequel
le rapport de surveillance comprend une valeur dérivée des enregistrements de données qui remplissent les conditions.

12. Procédé selon la revendication 11, dans lequel
la valeur est indicative d'un ou plusieurs éléments parmi : un type de trafic, un type de trafic générique englobant plusieurs types de trafic sur un niveau hiérarchique inférieur, une prédiction effectuée par un algorithme d'apprentissage automatique sur la base des enregistrements de données qui remplissent les conditions, une validité temporelle de la prédiction et une durée moyenne de trafic.

13. Procédé selon l'une quelconque des revendications précédentes, dans lequel
la période de surveillance est spécifiée dans la demande de surveillance.

14. Procédé selon l'une quelconque des revendications précédentes, dans lequel
la période de surveillance est une fonction d'un ou plusieurs paramètres de réseau variables.

15. Procédé selon l'une quelconque des revendications précédentes, dans lequel
le type de trafic est indicatif, ou dérivé, d'au moins un identifiant d'application d'une application (102B) impliquée dans le trafic de réseau et un nom de domaine de destination d'une destination du trafic de réseau.

16. Procédé selon l'une quelconque des revendications précédentes, dans lequel,
pour l'anonymisation, deux ou plusieurs types de trafic sur un niveau hiérarchique inférieur sont mappés dans le calcul à un seul type de trafic générique sur un niveau hiérarchique supérieur.

17. Procédé selon les revendications 15 et 16, dans lequel,
l'un ou les deux parmi les identifiants d'application différents et les noms de domaine de destination différents sont mappés, en tant que types de trafic de niveau inférieur, à un seul type de trafic générique sur le niveau hiérarchique supérieur.

18. Procédé selon l'une quelconque des revendications précédentes, dans lequel
chaque enregistrement de données comprend en outre un emplacement géographique du dispositif mobile (108) pendant l'activité de trafic ; dans lequel
la demande de surveillance spécifie en outre une zone géographique à surveiller ; et dans lequel,
lors du calcul du nombre de dispositifs mobiles, la condition supplémentaire suivante est prise en compte :
iv) l'emplacement géographique de l'activité de trafic se situe dans la zone géographique.

19. Procédé selon la revendication 18, dans lequel
l'emplacement géographique est défini par un identifiant de cellule.

20. Procédé selon la revendication 19, comprenant
la consultation d'une correspondance entre des identifiants de cellule et des zones géographiques pour déterminer si l'emplacement géographique de l'activité de trafic se situe dans la zone géographique.

21. Produit de programme informatique comprenant des parties de code de programme configurées pour exécuter les étapes du procédé selon l'une quelconque des revendications 1 à 20 lorsque le produit de programme informatique est exécuté sur un processeur.

22. Produit de programme informatique selon la revendication 21, stocké sur un support d'enregistrement lisible par ordinateur.

23. Appareil de réseau (112) configuré pour signaler des informations incluses dans des enregistrements de données générés pour des activités de trafic de réseau d'une pluralité de dispositifs mobiles (108), chaque enregistrement de données comprenant un type de trafic d'une activité de trafic d'un dispositif mobile (108), un horodatage de l'activité de trafic et un identifiant du dispositif mobile, l'appareil réseau étant configuré pour :
recevoir une demande de surveillance spécifiant un type de surveillance ;
calculer à partir des enregistrements de données un nombre de dispositifs mobiles (108) ayant, dans une période de surveillance donnée, des activités de trafic qui remplissent les conditions suivantes :
i) un type de trafic de l'activité de trafic correspond au type de surveillance ;
ii) un horodatage de l'activité de trafic tombe dans la période de surveillance ; et
iii) les activités de trafic associées au même identifiant du dispositif mobile (108) et au même type de trafic ne sont prises en compte qu'une seule fois par période de surveillance ; et
renvoyer, en réponse à la demande de surveillance, un rapport de surveillance qui est basé sur le nombre calculé de dispositifs mobiles (108).

24. Appareil de réseau selon la revendication 23, configuré comme ou situé sur un noeud de passerelle de paquets d'un réseau de communications mobiles de 4ème génération (100).

25. Appareil de réseau selon la revendication 23, configuré comme ou situé au même endroit qu'une fonction d'analyse de données de réseau d'un réseau de communications mobiles de 5ème génération (100).

26. Système de réseau (1000) comprenant
l'appareil de réseau (112) selon l'une quelconque des revendications 23 à 25 ; et
un premier noeud de passerelle configuré pour acheminer le trafic de réseau pour un premier ensemble de dispositifs mobiles (108) pour lesquels des informations sur les activités de trafic réseau doivent être rapportées ; et
un second noeud de passerelle configuré pour acheminer le trafic de réseau pour un second ensemble de dispositifs mobiles (108) pour lesquels des informations sur les activités de trafic réseau ne doivent pas être rapportées.

27. Système de réseau (1000) comprenant
l'appareil de réseau (112) selon l'une quelconque des revendications 23 à 25 ; et
un premier noeud de passerelle configuré pour acheminer le trafic de réseau pour les dispositifs mobiles (108) pour lesquels des informations sur les activités de trafic de réseau doivent être rapportées, le premier noeud de passerelle effectuant un acheminement jusqu'à ce qu'une condition de réacheminement soit remplie ; et
un second noeud de passerelle configuré pour acheminer le trafic de réseau pour l'ensemble de dispositifs mobiles (108) après que la condition de réacheminement soit remplie.

28. Système de réseau selon la revendication 27, dans lequel la condition de réacheminement est l'écoulement d'une période de temps prédéfinie démarrée individuellement par dispositif mobile (108).
